# EUROPEAN PATENT SPECIFICATION

(11) **EP 3 290 481 B1**
(45) Date of publication and mention of the grant of the patent: **11.09.2024**
(21) Application number: 16786376.0
(22) Date of filing: 20.04.2016
(51) Int. Cl.: C08L 79/08, C08G 18/76, C08G 73/14, C09D 127/12, C09D 179/08

(54) **POLYAMIDEIMIDE RESIN COMPOSITION AND COATING MATERIAL**
POLYAMIDIMIDHARZZUSAMMENSETZUNG UND BESCHICHTUNGSMATERIAL
COMPOSITION DE RÉSINE POLYAMIDE-IMIDE ET MATÉRIAU DE REVÊTEMENT

(30) Priority: 30.04.2015 JP 2015092844
(43) Date of publication of application: 07.03.2018
(73) Proprietor: Resonac Corporation, Tokyo 105-7325 (JP)
(72) Inventor: TAKAHASHI, Atsushi, Tokyo 100-6606 (JP); SAITO, Yasuyuki, Tokyo 100-6606 (JP); HARADA, Yuta, Tokyo 100-6606 (JP)
(74) Representative: Hoffmann Eitle
(86) International application number: PCT/JP2016/062503
(87) International publication number: WO 2016/175099

(56) References cited:
- JP-A- 2009 091 511
- JP-A- 2010 111 844
- JP-A- 2011 236 385
- JP-A- 2013 256 625
- JP-A- 2014 181 332

## Description

### TECHNICAL FIELD

The present invention relates to the use of a fluorine-based coating material comprising a polyamideimide resin composition and a fluororesin for forming a coating film on specified articles, and the articles thus obtained.

### BACKGROUND

Polyamideimide resins have excellent heat resistance, chemical resistance and solvent resistance, and are therefore widely used as coating agents for various substrates. For example, polyamideimide resins are used as varnishes for enameled wires and as heat-resistant coating materials.

Patent Document 1 discloses a polyamideimide resin having excellent transparency.

Further, in recent years, for reasons including environmental preservation, safety and hygiene, economic viability and coating workability, aqueous resin solutions that use water as the solvent medium instead of an organic solvent are attracting considerable attention, and a method for converting a polyamideimide resin to a water-soluble form by reacting a basic compound with the residual carboxyl groups at the resin terminals has been reported (Patent Document 2), and is being used in a variety of applications.

Patent Document 3 describes a water-based heat-resistant resin composition comprising (A) a polyamideimide resin, (B) a basic compound and (C) water.

### PRIOR ART DOCUMENTS

### PATENT DOCUMENTS

Patent Document 1: JP 2012-197339 A
Patent Document 2: JP 3491624 B
Patent Document 3 : JP 2009 091511 A

### SUMMARY OF INVENTION

### TECHNICAL PROBLEM

The water-soluble polyamideimide resins described above can be diluted with water to any arbitrary concentration, exhibit excellent miscibility with fluororesin aqueous dispersions, and yield coating films having excellent heat resistance and hardness, and are therefore particularly beneficial as fluororesin binders in coating materials designed for household electrical appliances or kitchen utensils.

Coating materials for household electrical appliances or kitchen utensils are composed of a mixed system containing a fluororesin that generates non-tacky properties, and a polyamideimide resin that generates good adhesion to substrates, and in order to ensure that the fluororesin orients toward the coating film surface during coating film firing, high-temperature firing at a temperature in the vicinity of 400°C that causes the fluororesin to melt is required.

However, the coating films obtained from conventional water-soluble polyamideimide resins are not entirely satisfactory in terms of providing the levels of substrate adhesion and steam resistance required for household electrical appliances or kitchen utensils, and in particular, are unsuitable for use in applications that require steam resistance, such as rice cookers and pressure cookers.

The present invention has the object of providing a polyamideimide resin composition in a coating material for forming a coating film on the surface of articles including household electrical appliances or kitchen utensils that require steam resistance.

### SOLUTION TO PROBLEM

The above object is solved by the subject-matter as defined in the appended claims. Thus, the invention relates to the use of a fluorine-based coating material comprising a polyamideimide resin composition and a fluororesin for forming a coating film on a at least a portion of a surface of a specified article. The invention further relates to an article having a coating film formed from the fluorine-based coating material on at least a portion of a surface of the article.

### ADVANTAGEOUS EFFECTS OF INVENTION

According to the present invention, by using a polyamideimide resin containing a prescribed amount of 3,3'-dimethylbiphenyl structural units within the molecule, a coating film can be formed that exhibits excellent adhesion to substrates and excellent steam resistance even after high-temperature firing. Further, by forming a water-based coating material, a contribution can be made to VOC reduction.

### DESCRIPTION OF EMBODIMENTS

### 1. Polyamideimide Resin Composition

The polyamideimide resin composition used in the present invention is a water-based polyamideimide resin composition containing a polyamideimide resin (A), water (B), and an organic solvent (C).

### <(A) Polyamideimide Resin>

The polyamideimide resin of the component (A) contains structural units derived from 3,3'-dimethylbiphenyl-4,4'-diisocyanate and/or 3,3'-dimethylbiphenyl-4,4'-diamine in an amount totaling 45 mol% or more relative to all of the structural units derived from isocyanates and/or diamines.

In other words, polyamideimide resins are resins obtained by reacting a diisocyanate compound and/or a diamine compound with a tribasic acid anhydride (or tribasic acid chloride) as an acid component, and the polyamideimide resin of the embodiment contains, among the monomers that constitute the resin, 3,3'-dimethylbiphenyl-4,4'-diisocyanate and/or 3,3'-dimethylbiphenyl-4,4'-diamine in an amount totaling 45 mol% or more of all the diisocyanates and/or diamines.

From the viewpoint of further enhancing the steam resistance, the total amount of the aforementioned diisocyanate and/or diamine having a 3,3'-dimethylbiphenyl structure is preferably 55 mol% or more, and more preferably 60 mol% or more, of all of the diisocyanates and/or diamines. On the other hand, from the viewpoint of ensuring satisfactory solubility in the water of the component (B), this total amount is preferably not more than 80 mol%, and is more preferably 70 mol% or less.

From the viewpoint of improving the working environment, 3,3'-dimethylbiphenyl-4,4'-diisocyanate is preferably used as the diisocyanate and/or diamine having a 3,3'-dimethylbiphenyl structure.

In another embodiment, structural units derived from 3,3'-dimethylbiphenyl-4,4'-diisocyanate and/or 3,3'-dimethylbiphenyl-4,4'-diamine are preferably included in the resin in an amount totaling 15 mol% or more relative to all of the structural units of the polyamideimide resin. In other words, the polyamideimide resin contains, among the monomers that constitute the resin, 3,3'-dimethylbiphenyl-4,4'-diisocyanate and/or 3,3'-dimethylbiphenyl-4,4'-diamine in an amount totaling 15 mol% or more of all the monomers including also the carboxylic acid that represents the acid component.

From the viewpoint of ensuring favorable steam resistance and good solubility in water, the structural units derived from 3,3'-dimethylbiphenyl-4,4'-diisocyanate and/or 3,3'-dimethylbiphenyl-4,4'-diamine preferably represent 25 mol% or more, and even more preferably 30 mol% or more, of the entire resin, but preferably represent not more than 50 mol%, and more preferably 40 mol% or less, of the entire resin.

Examples of diisocyanate components that may be used besides the 3,3'-dimethylbiphenyl-4,4'-diisocyanate include 4,4'-diphenylmethane diisocyanate, xylylene diisocyanate, 3,3'-diphenylmethane diisocyanate, para-phenylene diisocyanate, hexamethylene diisocyanate, tolylene diisocyanate, naphthalene diisocyanate and isophorone diisocyanate. From the viewpoint of reactivity, a combination use of 4,4'-diphenylmethane diisocyanate is preferred.

These diisocyanates that can be used in combination may be used individually, or a combination of a plurality of compounds may be used.

In those cases where it is necessary to avert changes over time, a blocked isocyanate in which the isocyanate groups have been stabilized with a blocking agent may be used as the diisocyanate. Examples of the blocking agent include alcohols, phenols and oximes, and there are no particular limitations.

Examples of diamine compounds that may be used besides the 3,3'-dimethylbiphenyl-4,4'-diamine include 4,4'-diaminodiphenylmethane, 4,4'-diaminodiphenyl ether, 4,4'-diaminodiphenylsulfone, 3,3'-diaminodiphenylsulfone, xylylenediamine, phenylenediamine and isophoronediamine. These diamines may be used individually, or a combination of a plurality of compounds may be used.

An example of the tribasic acid anhydride that functions as the acid component of the polyamideimide resin is trimellitic anhydride, and an example of the tribasic acid chloride is trimellitic anhydride chloride. From the viewpoint of reducing environmental impact, the use of trimellitic anhydride or the like is preferred.

Besides the tribasic acid anhydride (or tribasic acid chloride) described above, other acidic components such as dicarboxylic acids and tetracarboxylic dianhydrides may also be used as acid components, provided they do not impair the properties of the polyamideimide resin.

Examples of the dicarboxylic acids include terephthalic acid, isophthalic acid, adipic acid and sebacic acid. Examples of the tetracarboxylic dianhydrides include pyromellitic dianhydride, benzophenone tetracarboxylic dianhydride and biphenyl tetracarboxylic dianhydride. These compounds may be used individually, or a combination of a plurality of compounds may be used.

From the viewpoint of maintaining the properties of the polyamideimide resin, the total amount of carboxylic acids (dicarboxylic acids and tetracarboxylic acids) other than the tribasic acid is preferably within a range from 0 to 30 mol% of all the carboxylic acids.

From the viewpoint of the molecular weight and the crosslinking degree of the produced polyamideimide resin, the usage ratio between the diisocyanate and/or diamine and the acid component (the total of the tribasic acid anhydride or tribasic acid chloride, and the dicarboxylic acid and tetracarboxylic dianhydride that are used as required) is set so that for each 1.0 mol of the total of all the acid components, the amount of the diisocyanate compound and/or diamine compound is preferably within a range from 0.8 to 1.1 mol, more preferably from 0.95 to 1.08 mol, and even more preferably from 1.0 to 1.08 mol.

The polyamideimide resin is obtained by copolymerizing the diisocyanate and/or diamine and the acid component in a polar solvent.

Examples of solvents that can be used as the polar solvent used in the polymerization include N-methyl-2-pyrrolidone, N-formylmorpholine, N-acetylmorpholine, N,N'-dimethylethyleneurea, N,N-dimethylacetamide or N,N-dimethylformamide, and γ-butyrolactone.

From the viewpoint of solubility, N-methyl-2-pyrrolidone is generally used, but from the viewpoint of achieving a good working environment and safety control, the use of N-formylmorpholine is preferred.

There are no particular limitations on the amount used of the solvent, but using an amount of solvent of 50 to 500 parts by mass per 100 parts by mass of the total mass of the diisocyanate component or diamine component and the acid component is preferred from the viewpoint of the solubility of the obtained resin.

A diverse range of synthesis conditions may be used for the polyamideimide resin, and although there are no particular limitations, the synthesis is usually performed at a temperature of 80 to 180°C, and in order to reduce the effect of moisture in the air, the synthesis is preferably conducted under an atmosphere of nitrogen or the like.

From the viewpoint of ensuring favorable coating film strength, the number-average molecular weight of the polyamideimide resin is preferably at least 5,000, more preferably at least 10,000, and even more preferably 15,000 or greater. On the other hand, in order to ensure satisfactory solubility in water, the number-average molecular weight is preferably not more than 50,000, more preferably not more than 30,000, and even more preferably 25,000 or less.

The number-average molecular weight of the polyamideimide resin can be controlled within the above range by sampling the reaction mixture during the resin synthesis, measuring the molecular weight by gel permeation chromatography (GPC) using a calibration curve prepared using standard polystyrenes, and continuing the synthesis until the targeted number-average molecular weight has been achieved.

The polyamideimide resin preferably has an acid value, composed of a combination of carboxyl groups in the resin and other carboxyl groups formed as a result of ring-opening of acid anhydride groups, within a range from 15 to 80 mgKOH/g. Provided this acid value is at least 15 mgKOH/g, the amount of carboxyl groups is sufficient for reaction with the basic compound described below, and the resin tends to be more easily converted to a water-soluble form. Further, provided the acid value is not more than 80 mgKOH/g, the final polyamideimide resin composition tends to be less likely to gel upon storage. From these viewpoints, the acid value composed of the combination of carboxyl groups and other carboxyl groups formed as a result of ring-opening of acid anhydride groups is more preferably at least 25 mgKOH/g, is also preferably not more than 60 mgKOH/g, and more preferably 45 mgKOH/g or less.

The acid value can be measured using the following method. First, about 0.5 g of the polyamideimide resin composition is sampled, about 0.15 g of 1,4-diazabicyclo[2.2.2]octane is added to the sample, about 60 g of N-methyl-2-pyrrolidone and about 1 ml of ion-exchanged water are then added, and the resulting mixture is stirred until the polyamideimide resin dissolves completely. This solution is then titrated against a 0.05 mol/L ethanolic potassium hydroxide solution using a potentiometric titrator to obtain the acid value for the polyamideimide resin, representing the combination of carboxyl groups and those carboxyl groups formed as a result of ring-opening of acid anhydride groups.

The polyamideimide resin can, for example, be produced using any of the following procedures.
(1) A method of synthesizing the polyamideimide resin by using and reacting the acid component and the diisocyanate component and/or diamine component in a single batch.
(2) A method of reacting the acid component with an excess of the diisocyanate component and/or diamine component to synthesize an amideimide oligomer having isocyanate groups or amino groups at the terminals, and then synthesizing the polyamideimide resin by adding additional acid component to react with the terminal isocyanate groups and/or amino groups.
(3) A method of reacting an excess of the acid component with the diisocyanate component and/or diamine component to synthesize an amideimide oligomer having acid groups or acid anhydride groups at the terminals, and then synthesizing the polyamideimide resin by adding additional diisocyanate component and/or diamine component to react with the terminal acid groups and/or acid anhydride groups.

### <(B) Water>

The water used as the component (B) in the polyamideimide resin composition is preferably ion-exchanged water. From the viewpoint of improving the solubility of the polyamideimide resin in the water, the amount added of the component (B) represents at least 10% by mass, preferably at least 15% by mass, and more preferably 25% by mass or more, of the total mass of the component (A) described above, the component (B), and the organic solvent of the component (C).

Because the polyamideimide resin composition contains water, it can be mixed easily with both water-based and solvent-based materials, and can be used favorably in various applications, including as a component of water-based coating materials and solvent-based coating materials.

Further, the composition also offers the advantage of enabling a relative reduction in the amount of organic solvent volatilized and lost outside the system during coating film formation.

### <(C) Organic Solvent>

The polyamideimide resin composition contains an organic solvent as the component (C). From the viewpoint of storage stability, the organic solvent is preferably miscible with water to form a semi-transparent or transparent solution, and for example, either one solvent, or two or more solvents may be selected from among the polar solvents described above for use in the polyamideimide resin synthesis.

From the viewpoint of solubility, the organic solvent is preferably used in an amount of 80 to 200 parts by mass, and more preferably 100 to 150 parts by mass, per 100 parts by mass of the component (A).

This organic solvent may simply utilize the solvent used in the production of the polyamideimide resin, or a separate solvent from the synthesis solvent may be added. In other words, during the synthesis of the resin composition, the polyamideimide resin solution obtained as a result of the polyamideimide resin synthesis may be used without further modification.

Examples of separate solvents that may be used besides the synthesis solvent include ether compounds such as anisole, diethyl ether and ethylene glycol, ketone compounds such as acetophenone, methyl ethyl ketone and methyl isobutyl ketone, and alcohols such as ethanol and 2-propanol.

In terms of the proportion of each component within the polyamideimide resin composition, the amount of the polyamideimide resin (A) is preferably about 10 to 40% by mass, the amount of the water (B) is preferably about 20 to 80% by mass, and the amount of the organic solvent (C) is preferably about 10 to 40% by mass.

### <Other Components>

In the embodiment, a basic compound is preferably added to enhance the solubility of the polyamideimide resin (A) in the water (B). This basic compound enhances the solubility of the resin by reacting with the carboxyl groups in the polyamideimide resin to form salts.

Examples of suitable basic compounds include:
alkylamines such as triethylamine, tributylamine, N,N-dimethylcyclohexylamine, N,N-dimethylbenzylamine, triethylenediamine, N-methylmorpholine, N,N,N',N'-tetramethylethylenediamine, N,N,N',N",N"-pentamethyldiethylenetriamine, N,N',N'-trimethylaminoethylpiperazine, diethylamine, diisopropylamine, dibutylamine, ethylamine, isopropylamine and butylamine; and
alkanolamines such as monoethanolamine, diethanolamine, triethanolamine, dipropanolamine, tripropanolamine, N-ethylethanolamine, N,N-dimethylethanolamine, N,N-diethylethanolamine, cyclohexanolamine, N-methylcyclohexanolamine and N-benzylethanolamine.

Besides the basic compounds mentioned above, alkali metal hydroxides (caustic alkalis) such as sodium hydroxide and potassium hydroxide, or ammonia water or the like may also be used in combination with the above basic compounds.

The basic compound is preferably used in an amount of 2.5 to 10 equivalents relative to the acid value of the combination of carboxyl groups and ring-opened acid anhydride groups within the polyamideimide resin (A). Using at least 2.5 equivalents facilitates the conversion of the resin to a water-soluble form, and using an amount of not more than 10 equivalents tends to improve the coating film strength. For these reasons, the amount added of the basic compound is more preferably within a range from 4 to 8 equivalents relative to the acid value of the combination of the carboxyl groups and the other carboxyl groups formed as a result of ring-opening of acid anhydride groups.

The salt formation between the polyamideimide resin and the basic compound may be achieved by adding the basic compound to the polyamideimide resin composition containing water, or by adding the basic compound to an organic solvent solution of the polyamideimide resin that contains no water, and subsequently adding water. The temperature during salt formation is preferably within a range from 0°C to 200°C, and more preferably from 40°C to 130°C.

The polyamideimide resin composition may also contain other optional components, depending on the intended use. For example, in the case of use as a coating material, in order to enable the resin composition to be used favorably as a coating material, one or more optional components such as pigments, fillers, antifoaming agents, preservatives and surfactants may be added as required.

The coating film obtained from the polyamideimide resin composition exhibits excellent adhesion to substrates and excellent steam resistance even after high-temperature firing, and this resin composition also exhibits excellent miscibility with fluororesin aqueous dispersions, and yields a coating film having excellent heat resistance and hardness, and is therefore ideal as a fluororesin binder in coating materials for household electrical appliances or kitchen utensils. Accordingly, in the present invention, the polyamideimide resin of the component (A) is used as a coating film-forming component in a mixed coating material containing a fluororesin.

Further, because the polyamideimide resin composition of the embodiment also exhibits excellent steam resistance, it is used in a fluorine-based coating material for coating film formation on substrate surfaces that are exposed to steam, namely surfaces of household electrical appliances or kitchen utensils as specified in the claims.

### 2. Fluorine-Based Coating Material

A coating material used in the present invention is a fluorine-based coating material prepared by adding a fluororesin to the polyamideimide resin composition described above, namely, a coating material containing the polyamideimide resin (A), the water (B), the organic solvent (C), and a fluororesin. This fluorine-based coating material is used as a coating material for household electrical appliances or kitchen utensils.

The properties required of a fluororesin added to a fluorine-based coating material include non-tackiness, corrosion resistance, heat resistance and chemical resistance. There are no particular limitations on the type of fluororesin used, and tetrafluoroethylene resins, tetrafluoroethylene-perfluoro vinyl ether copolymers, and tetrafluoroethylene-hexafluoropropylene copolymers can be used favorably, or a combination of a plurality of these resins may be used.

There are no particular limitations on the form of the fluororesin, and either an aqueous dispersion or a powder may be used.

Although there are no particular limitations on the amount of the fluororesin in the coating material, in order to obtain a coating film having a good balance between superior adhesion and non-tackiness, the amount of the fluororesin is preferably from 50 to 800 parts by mass, and more preferably from 100 to 500 parts by mass, per 100 parts by mass of the polyamideimide resin.

The polyamideimide resin of the component (A) described above functions as the coating film-forming component of the coating material, and acts as a binder resin for the fluororesin. A combination of a plurality of different types of the component (A) may be used as this polyamideimide resin, and a polyamideimide resin other than the aforementioned component (A) may also be included.

In order to ensure satisfactory manifestation of the resin functions described above, the polyamideimide resin of the component (A) described above is preferably included in the coating material in an amount of 10 to 50% by mass.

If necessary, the coating material may also use one or more polyethersulfone resins (PES), polyimide resins (PI), polyamide resins, epoxy compounds, isocyanate compounds, or melamine compounds or the like. Among these, epoxy compounds, isocyanate compounds and melamine compounds are preferred, as they enable further improvement in the adhesion of the coating film.

Examples of the epoxy compounds include bisphenol-A epoxy resins, hydrogenated bisphenol-A epoxy resins, bisphenol-F epoxy resins, brominated bisphenol-A epoxy resins, phenol novolac epoxy resins, o-cresol novolac epoxy resins, flexible epoxy resins, polyfunctional epoxy resins, amine epoxy resins, heterocyclic ring-containing epoxy resins, alicyclic epoxy resins, bisphenol-S epoxy resins, triglycidyl isocyanurate, bixylenol epoxy resins and bisphenol epoxy resins, and these compounds may be used individually, or a plurality of compounds may be combined.

Examples of the isocyanate compounds include polyisocyanates of hexamethylene diisocyanate such as Duranate, and polyisocyanates synthesized from 4,4'-diphenylmethane diisocyanate. The mass-average molecular weight of these polyisocyanates is preferably from 500 to 9,000, and more preferably from 1,000 to 5,000.

There are no particular limitations on the melamine compounds, and examples include methylol group-containing compounds obtained by reacting melamine with formaldehyde or para-formaldehyde or the like. These methylol groups are preferably etherified with an alcohol having 1 to 6 carbon atoms.

In terms of the amount of these epoxy compounds, isocyanate compounds and melamine compounds added to the coating material, from the viewpoint of ensuring an improvement in adhesion as a result of the addition, while also achieving satisfactory manifestation of the properties of the polyamideimide resin, the amount of each of these compounds is preferably within a range from 1 to 40 parts by mass, and more preferably from 5 to 30 parts by mass, per 100 parts by mass of the polyamideimide resin.

The coating material preferably also includes a surfactant depending on need. Although there are no particular limitations on the surfactant, a surfactant which ensures that the components that form the coating material mix uniformly and do not separate (and form a separate layer) before the coating film dries, and which does not leave a large amount of residual matter following firing, is preferred.

Although there are no particular limitations on the amount of the surfactant, in order to ensure a uniform mixed state, the amount is preferably at least 0.01% by mass, and more preferably 0.5% by mass or more, of the mass of the coating material. On the other hand, in order to ensure that a large residual carbonized fraction is not retained during firing of the coating film and adversely affects the film formation properties, the amount of the surfactant is preferably not more than 10% by mass, and more preferably 5% by mass or less, of the mass of the coating material.

In order to improve the water resistance of the coating film, the coating material may also contain a filler if required.

The type of filler used can be selected in accordance with the intended application of the coating film, with due consideration of factors such as the water resistance and the chemical resistance of the filler, and is preferably a filler that does not dissolve in water. Specific examples of the filler include metal powders, metal oxides (such as aluminum oxide, zinc oxide, tin oxide and titanium oxide), glass beads, glass flakes, glass particles, ceramics, silicon carbide, silicon oxide, calcium fluoride, carbon black, graphite, mica and barium sulfate. These fillers may be used individually, or a combination of a plurality of fillers may be used.

The fluorine-based coating material used in the present invention can form a coating film having excellent adhesion and steam resistance.

Accordingly, the present invention relates to the use (application) of the fluorine-based coating material described above for forming a coating film on at least a portion of the surface of an article as specified herein.

In an embodiment, the present invention relates to the use (application) of the fluorine-based coating material described above for forming a coating film on a surface of an article, wherein the surface is exposed to steam.

### 3. Article

An article of the present invention is an article having a coating film formed from the fluorine-based coating material described above on at least a portion of the surface of the article.

The surface of the article on which the coating film is formed is preferably a surface that is exposed to steam and/or a surface that is exposed to high temperatures. Accordingly, the article is a household electrical cooking appliance, a kitchen utensil, a printer or a copier.

Specific examples of the kitchen utensils include utensils for which there is a possibility of contact with boiling water or steam, such as pots, pressure cookers and fry pans, and more specifically, pots, pressure cookers and fry pans having the coating film described above formed on the inside surface, and lids for these utensils. Further, specific examples of the household electrical cooking appliances (kitchen electrical appliances) include rice cookers, hot plates, electric kettles, microwave ovens, oven ranges and gas ranges, and more specifically, inner pots and lids of rice cookers having the coating film described above formed on the inside surface thereof, microwave ovens having the coating film formed on the interior surface of the oven, and the top plates of gas ranges having the coating film formed on the surface.

Specific examples of the copiers and printers include rollers such as heat rollers and pressure rollers having the coating film described above formed on the outer surface of the roller.

There are no particular limitations on the method used for forming the coating film containing the polyamideimide resin of the component (A) described above, and conventional coating methods such as dip coating, spray coating and brush application can be employed. An organic solvent and/or water is preferably added to dilute the coating material to a concentration that is appropriate for the selected coating method.

Examples of suitable organic solvents for this dilution include polar solvents such as dimethylformamide, dimethylacetamide, dimethyl sulfoxide, N-methyl-2-pyrrolidone and N-formylmorpholine, and co-solvents such as polyols, and lower alkyl ethers or acetylated products thereof may also be used. For example, ethylene glycol, diethylene glycol, triethylene glycol, tetraethylene glycol, glycerol, trimethylolpropane and isopropyl alcohol, as well as the monomethyl ethers, monoethyl ethers, monoisopropyl ethers, monobutyl ethers and dimethyl ethers of these solvents, and the monoacetylated products of these ethers may be used.

Following application of the coating material, the material is dried (preliminary drying) and cured (firing) to form a coating film. There are no particular limitations on the conditions for the drying and curing, but in the case of a fluorine-based coating material, in order to ensure that the fluororesin orients toward the coating film surface during coating film firing, a high-temperature firing at a temperature in the vicinity of 400°C is preferably conducted to melt the fluororesin, and performing the firing at a temperature of 330°C to 420°C for a period of about 10 minutes to 30 minutes is preferred.

As a result of this firing, the fluororesin migrates toward the coating film surface, and melts to form a film.

By applying the fluorine-based coating material containing the polyamideimide resin as a coating film component to a target article and then performing curing, a coating film can be formed which, compared with conventional coating films, exhibits excellent adhesion to the substrate and excellent steam resistance even after high-temperature firing. Accordingly, the present invention has enormous benefits in a large variety of applications that require boiling resistance or steam resistance and heat resistance for surface coating films on household electrical appliances and cooking utensils.

In addition, because this polyamideimide resin composition is a water-based resin composition, the environmental impact can be reduced, and a contribution can also be made to VOC reduction.

### EXAMPLES

Examples of the present invention are described below, but the present invention is in no way limited by these examples, and of course also incorporates many embodiments other than these examples based on the scope of the present invention.

### <Example 1> - Reference polyamideimide resin composition

First, 785.5 g of trimellitic anhydride, 700.7 g of 4,4'-diphenylmethane diisocyanate, 317.1 g of 3,3'-dimethylbiphenyl-4,4'-diisocyanate and 1,786.4 g of N-formylmorpholine were placed in a flask fitted with a thermometer, a stirrer and a condenser, and the resulting mixture was stirred for 3 hours under a stream of dry nitrogen while the temperature was gradually raised to 140°C. The temperature was then held at 140°C while particular care was taken over the rapid foaming of carbon dioxide gas that was generated by the reaction, and after continued heating at this temperature for 6 hours, the reaction was halted, thus obtaining a polyamideimide resin solution.

The non-volatile fraction (200°C, 2 hours) of this polyamideimide resin solution was 47% by mass. Further, the number-average molecular weight of the polyamideimide resin was 25,000, and the acid value composed of a combination of carboxyl groups and other carboxyl groups formed as a result of ring-opening of acid anhydride groups was 25 mgKOH/g.

The number-average molecular weight of the resin was measured under the following conditions.
GPC apparatus: Hitachi L6000
Detector: Hitachi L4000 UV
Wavelength: 270 nm
Data processing unit: ATT 8
Columns: Gelpack GL-S300MDT-5 × 2
Column size: 8 mmø × 300 mm
Solvent: DMF/THF = 1/1 (liter) + 0.06 M phosphoric acid + 0.06 M lithium bromide
Sample concentration: 5 mg/ml
Injection volume: 5 µl
Pressure: 49 kgf/cm² (4.8×10⁶ Pa)
Flow rate: 1.0 ml/min

Subsequently, 3,200 g of the thus obtained polyamideimide resin solution was placed in a flask fitted with a thermometer, a stirrer and a condenser, and the solution was stirred under a stream of dry nitrogen while the temperature was gradually raised to 80°C. When the temperature reached 80°C, 478.0 g (8 equivalents) of N,N-dimethylethanolamine was added, and following thorough stirring with the temperature maintained at 80°C, ion-exchanged water was added gradually to the flask under constant stirring. The ion-exchanged water was added until a final total of 1,581.7 g of water (equivalent to 30% by mass of the composition) had been added, thus obtaining a transparent and uniform polyamideimide resin composition.

### <Example 2> - Polyamideimide resin composition for use in the invention

First, 480.3 g of trimellitic anhydride, 250.3 g of 4,4'-diphenylmethane diisocyanate, 396.4 g of 3,3'-dimethylbiphenyl-4,4'-diisocyanate and 1,377.4 g of N-formylmorpholine were placed in a flask fitted with a thermometer, a stirrer and a condenser, and the resulting mixture was stirred for one hour under a stream of dry nitrogen while the temperature was gradually raised to 120°C. The temperature was then raised gradually to 140°C while particular care was taken over the rapid foaming of carbon dioxide gas that was generated by the reaction, and after continued heating at this temperature for 4 hours, the reaction was halted, thus obtaining a polyamideimide resin solution.

The non-volatile fraction (200°C, 2 hours) of this polyamideimide resin solution was 43% by mass. Further, the number-average molecular weight of the polyamideimide resin was 15,000, and the acid value composed of a combination of carboxyl groups and other carboxyl groups formed as a result of ring-opening of acid anhydride groups was 40 mgKOH/g.

Subsequently, 2,000 g of the thus obtained polyamideimide resin solution was placed in a flask fitted with a thermometer, a stirrer and a condenser, and the solution was stirred under a stream of dry nitrogen while the temperature was gradually raised to 60°C. When the temperature reached 60°C, 246.0 g (4 equivalents) of N,N-dimethylethanolamine was added, and following thorough stirring with the temperature maintained at 60°C, ion-exchanged water was added gradually to the flask under constant stirring. The ion-exchanged water was added until a final total of 771.6 g of water (equivalent to 25% by mass of the composition) had been added, thus obtaining a transparent and uniform polyamideimide resin composition.

### <Example 3> - Polyamideimide resin composition for use in the invention

First, 307.4 g of trimellitic anhydride, 160.2 g of 4,4'-diphenylmethane diisocyanate, 253.7 g of 3,3'-dimethylbiphenyl-4,4'-diisocyanate and 781.4 g of N-methyl-2-pyrrolidone were placed in a flask fitted with a thermometer, a stirrer and a condenser, and the resulting mixture was stirred for two hours under a stream of dry nitrogen while the temperature was gradually raised to 100°C. The temperature was then held at 100°C while particular care was taken over the rapid foaming of carbon dioxide gas that was generated by the reaction, and after continued heating at this temperature for 6 hours, the reaction was halted, thus obtaining a polyamideimide resin solution.

The non-volatile fraction (200°C, 2 hours) of this polyamideimide resin solution was 45% by mass. Further, the number-average molecular weight of the polyamideimide resin was 15,000, and the acid value composed of a combination of carboxyl groups and acid anhydride groups was 40 mgKOH/g.

Subsequently, 1,200 g of the thus obtained polyamideimide resin solution was placed in a flask fitted with a thermometer, a stirrer and a condenser, and the solution was stirred under a stream of dry nitrogen while the temperature was gradually raised to 70°C. When the temperature reached 70°C, 154.4 g (4 equivalents) of N,N-dimethylethanolamine was added, and following thorough stirring with the temperature maintained at 70°C, ion-exchanged water was added gradually to the flask under constant stirring. The ion-exchanged water was added until a final total of 445.5 g of water (equivalent to 25% by mass of the composition) had been added, thus obtaining a transparent and uniform polyamideimide resin composition.

### <Comparative Example 1>

First, 1,106.2 g of trimellitic anhydride, 1,455.8 g of 4,4'-diphenylmethane diisocyanate and 2,562.0 g of N-methyl-2-pyrrolidone were placed in a flask fitted with a thermometer, a stirrer and a condenser, and the resulting mixture was stirred for two hours under a stream of dry nitrogen while the temperature was gradually raised to 130°C. The temperature was then held at 130°C while particular care was taken over the rapid foaming of carbon dioxide gas that was generated by the reaction, and after continued heating at this temperature for 4 hours, the reaction was halted, thus obtaining a polyamideimide resin solution.

The non-volatile fraction (200°C, 2 hours) of this polyamideimide resin solution was 50% by mass. Further, the number-average molecular weight of the polyamideimide resin was 15,000, and the acid value composed of a combination of carboxyl groups and other carboxyl groups formed as a result of ring-opening of acid anhydride groups was 40 mgKOH/g.

Subsequently, 2,700 g of the thus obtained polyamideimide resin solution was placed in a flask fitted with a thermometer, a stirrer and a condenser, and the solution was stirred under a stream of dry nitrogen while the temperature was gradually raised to 50°C. When the temperature reached 50°C, 343.2 g (4 equivalents) of N,N-dimethylethanolamine was added, and following thorough stirring with the temperature maintained at 50°C, ion-exchanged water was added gradually to the flask under constant stirring. The ion-exchanged water was added until a final total of 1,481.0 g of water (equivalent to 32% by mass of the composition) had been added, thus obtaining a transparent and uniform polyamideimide resin composition.

### <Comparative Example 2>

First, 144.1 g of trimellitic anhydride, 159.5 g of 4,4'-diphenylmethane diisocyanate, 29.7 g of 3,3'-dimethylbiphenyl-4,4'-diisocyanate and 333.4 g of N-methyl-2-pyrrolidone were placed in a flask fitted with a thermometer, a stirrer and a condenser, and the resulting mixture was stirred for two hours under a stream of dry nitrogen while the temperature was gradually raised to 100°C. The temperature was then raised to 120°C while particular care was taken over the rapid foaming of carbon dioxide gas that was generated by the reaction, and after continued heating for 5 hours from the start of the heating process, the reaction was halted, thus obtaining a polyamideimide resin solution.

The non-volatile fraction (200°C, 2 hours) of this polyamideimide resin solution was 48% by mass. Further, the number-average molecular weight of the polyamideimide resin was 15,000, and the acid value composed of a combination of carboxyl groups and other carboxyl groups formed as a result of ring-opening of acid anhydride groups was 40 mgKOH/g.

Subsequently, 500 g of the thus obtained polyamideimide resin solution was placed in a flask fitted with a thermometer, a stirrer and a condenser, and the solution was stirred under a stream of dry nitrogen while the temperature was gradually raised to 60°C. When the temperature reached 60°C, 61.0 g (4 equivalents) of N,N-dimethylethanolamine was added, and following thorough stirring with the temperature maintained at 60°C, ion-exchanged water was added gradually to the flask under constant stirring. The ion-exchanged water was added until a final total of 239.0 g of water (equivalent to 30% by mass of the composition) had been added, thus obtaining a transparent and uniform polyamideimide resin composition.

### <Coating Film Evaluations>

Each of the polyamideimide resin compositions obtained in the above examples and comparative examples was applied, as a test coating material, to an aluminum substrate (1×50×150 mm, manufactured by Paltec Test Panels Co., Ltd.), and the adhesion and steam resistance tests described below were then conducted. The test methods are described below.

### [Adhesion]

The substrate to which the test coating material had been applied was subjected to preliminary drying at 80°C for 10 minutes, and was then fired at 400°C for 10 minutes, thus obtaining a coating film having an average film thickness of 10 µm across 5 locations. Cuts were then formed in this coating film to generate 1 mm squares in a 10×10 pattern, portions of adhesive tape (manufactured by Nichiban Co., Ltd.) were adhered to, and then peeled from, the surface 5 times, and the number of remaining squares was counted.

### [Steam Resistance (400°C Firing)]

The substrate to which the test coating material had been applied was subjected to preliminary drying at 80°C for 10 minutes, and was then fired at 400°C for 10 minutes, thus obtaining a coating film having an average film thickness of 10 µm across 5 locations. This substrate having a coating film was placed in an autoclave for 100 hours under conditions of 121°C and 2 atm., and the adhesion of the coating film was then evaluated in the same manner as described above.

### [Steam Resistance (420°C Firing)]

The substrate to which the test coating material had been applied was subjected to preliminary drying at 80°C for 10 minutes, and was then fired at 420°C for 10 minutes, thus obtaining a coating film having an average film thickness of 10 µm across 5 locations. This substrate having a coating film was placed in an autoclave for 100 hours under conditions of 121°C and 2 atm., and the adhesion of the coating film was then evaluated in the same manner as described above.

The test results are shown in Table 1. The "amount of 3,3'-dimethylbiphenyl-4,4'-diisocyanate component (mol%)" shown in Table 1 indicates the amount (mol%) of the component relative to the total mass of all the isocyanate components, and is calculated from the amounts used of each of the raw materials.

**[Table 1]**

| Item | | Example 1 | Example 2 | Example 3 | Comparative Example 1 | Comparative Example 2 |
|---|---|---|---|---|---|---|
| (A) Polyamide imide resin | Amount of 3,3'-dimethylbiphenyl-4,4'-diisocyanate component (mol%) | 30 | 60 | 60 | 0 | 15 |
| | Polymerization solvent | N-formylmorpholine | | N-methyl-2-pyrrolidone | | |
| | Number-average molecular weight | 25,000 | 15,000 | 15,000 | 15,000 | 15,000 |
| | Acid value (mgKOH/g) | 25 | 40 | 40 | 40 | 40 |
| (B) Water | Amount (% by mass) | 30 | 25 | 25 | 32 | 30 |
| Evaluation results | Adhesion | 100 | 100 | 100 | 30 | 85 |
| | Steam resistance (400°C firing) | 100 | 100 | 100 | 0 | 0 |
| | Steam resistance (420°C firing) | 15 | 100 | 100 | 0 | 0 |

As shown in Table 1, the coating films produced from the polyamideimide resin compositions of Examples 1 to 3 displayed significant improvements in the adhesion to the substrate and the steam resistance compared with the coating films produced from the polyamideimide resin compositions of Comparative Examples 1 and 2.

Based on these results, it is evident that by using the water-based polyamideimide resin composition according to an embodiment of the present invention, a coating film can be obtained that exhibits superior adhesion and steam resistance to those obtained using conventional water-based polyamideimide resin compositions.

Further, when fluorine-based coating materials were produced using the polyamideimide resin compositions of the examples and the comparative examples, evaluation results similar to the evaluation results described above were able to be obtained.

It should be noted that, in addition to the embodiments already described, various modifications and alterations may be made to these embodiments without departing from the novel advantageous features of the present invention. Accordingly, it is intended that all such modifications and alterations are included within the scope of invention, which is defined by the appended claims.

## Claims

1. Use of a fluorine-based coating material comprising a polyamideimide resin composition and a fluororesin, wherein the polyamideimide resin composition comprises a polyamideimide resin (A) that contains structural units derived from 3,3'-dimethylbiphenyl-4,4'-diisocyanate and/or 3,3'-dimethylbiphenyl-4,4'-diamine in an amount totaling 45 mol% or more relative to all structural units derived from isocyanates and/or diamines, water (B), and an organic solvent (C), wherein an amount of the water of component (B) is at least 10% by mass relative to a total mass of the polyamideimide resin (A), the water (B) and the organic solvent (C), for forming a coating film on a at least a portion of a surface of an article, wherein the article is a household electrical cooking appliance, a kitchen utensil, a printer or a copier.

2. The use according to Claim 1, wherein a number-average molecular weight of the polyamideimide resin (A), as measured by gel permeation chromatography (GPC) using a calibration curve prepared using standard polystyrenes, is from 5,000 to 50,000.

3. The use according to Claim 1 or 2, wherein an acid value of the polyamideimide resin (A), composed of a combination of carboxyl groups and other carboxyl groups formed as a result of ring-opening of acid anhydride groups, is from 10 to 80 mgKOH/g.

4. The use according to any one of Claims 1 to 3, wherein the surface is exposed to steam.

5. An article having a coating film formed from a fluorine-based coating material as defined in any one of Claims 1 to 3 on at least a portion of a surface of the article, wherein the article is a household electrical cooking appliance, a kitchen utensil, a copier or a printer.

6. The article according to claim 5, wherein the surface is exposed to steam.

## Patentansprüche

1. Verwendung eines Beschichtungsmaterials auf Fluorbasis, umfassend eine Polyamidimidharzzusammensetzung und ein Fluorharz, wobei die Polyamidimidharzzusammensetzung ein Polyamidimidharz (A), das von 3,3'-Dimethylbiphenyl-4,4'-diisocyanat und/oder 3,3'-Dimethylbiphenyl-4,4'-diamin abgeleitete Struktureinheiten in einer Menge von insgesamt 45 mol-% oder mehr, bezogen auf alle von Isocyanate und/oder Diaminen abgeleiteten Struktureinheiten, enthält, Wasser (B) und ein organisches Lösungsmittel (C) umfasst, wobei eine Menge des Wassers der Komponente (B) mindestens 10 Masse-%, bezogen auf eine Gesamtmasse des Polyamidimidharzes (A), des Wassers (B) und des organischen Lösungsmittels (C), beträgt,
zur Bildung eines Beschichtungsfilms auf mindestens einem Abschnitt einer Oberfläche eines Gegenstandes, wobei der Gegenstand ein elektrisches Haushaltskochgerät, ein Küchenutensil, ein Drucker oder ein Kopierer ist.

2. Verwendung gemäß Anspruch 1, wobei ein zahlenmittleres Molekulargewicht des Polyamidimidharzes (A), gemessen durch Gelpermeationschromatographie (GPC) unter Verwendung einer Kalibrierkurve, die unter Verwendung von Standard-Polystyrolen erstellt wird, 5.000 bis 50.000 beträgt.

3. Verwendung gemäß Anspruch 1 oder 2, wobei ein Säurewert des Polyamidimidharzes (A), zusammengesetzt aus einer Kombination von Carboxylgruppen und anderen Carboxylgruppen, die als Ergebnis einer Ringöffnung von Säureanhydridgruppen gebildet werden, 10 bis 80 mgKOH/g beträgt.

4. Verwendung gemäß einem der Ansprüche 1 bis 3, wobei die Oberfläche Dampf ausgesetzt ist.

5. Gegenstand mit einem Beschichtungsfilm, der aus dem in einem der Ansprüche 1 bis 3 gebildeten Beschichtungsmaterial auf Fluorbasis auf mindestens einem Abschnitt einer Oberfläche des Gegenstandes gebildet ist, wobei der Gegenstand ein elektrisches Haushaltskochgerät, ein Küchenutensil, ein Kopierer oder ein Drucker ist.

6. Gegenstand gemäß Anspruch 5, wobei die Oberfläche Dampf ausgesetzt ist.

## Revendications

1. Utilisation d'un matériau de revêtement à base de fluorine comprenant une composition de résine de polyamideimide et une résine fluorée, dans laquelle la composition de résine polyamideimide comprend une résine polyamideimide (A) qui contient des unités structurelles dérivées de 3,3'-diméthylbiphényl-4,4'-diisocyanate et/ou 3,3'-diméthylbiphényl-4,4'-diamine en une quantité totalisant 45 mol% ou plus par rapport à toutes les unités structurelles dérivées d'isocyanates et/ou diamines, d'eau (B), et d'un solvant organique (C), dans laquelle une quantité de l'eau du composant (B) est au moins 10 % en masse par rapport à une masse totale de la résine polyamideimide (A), de l'eau (B) et du solvant organique (C), pour former un film de revêtement sur au moins une partie d'une surface d'un article, dans laquelle l'article est un appareil électroménager de cuisson, un ustensile de cuisine, une imprimante ou une photocopieuse.

2. Utilisation selon la revendication 1, dans laquelle un poids moléculaire moyen en nombre de la résine polyamideimide (A), tel que mesuré par chromatographie de perméation sur gel (GPC) en utilisant une courbe d'étalonnage préparée à partir d'échantillons étalons en polystyrène, est de 5000 à 50 000.

3. Utilisation selon la revendication 1 ou la revendication 2, dans laquelle un indice d'acide de la résine polyamideimide (A), composée d'une combinaison de groupes carboxyle et d'autres groupes carboxyle formés en raison d'une ouverture de cycle de groupes anhydride d'acide, est de 10 à 80 mgKOH/g.

4. Utilisation selon l'une quelconque des revendications 1 à 3, dans laquelle la surface est exposée à de la vapeur.

5. Article présentant un film de revêtement formé d'un matériau de revêtement à base de fluorine tel que défini selon l'une quelconque des revendications 1 à 3 sur au moins une partie d'une surface de l'article, dans laquelle l'article est un appareil de cuisson électrique domestique, un ustensile de cuisine, une photocopieuse ou une imprimante.

6. Article selon la revendication 5, dans laquelle la surface est exposée à de la vapeur.
